# EUROPEAN PATENT SPECIFICATION

(11) **EP 4 664 908 B1**
(45) Date of publication and mention of the grant of the patent: **09.12.2026**
(21) Application number: 24755921.4
(22) Date of filing: 24.01.2024
(51) Int. Cl.: H04N 23/50, H04N 23/55, F16M 11/16, F16M 13/02, G03B 17/56

(54) **CAMERA**
KAMERA
CAMÉRA

(30) Priority: 13.02.2023 CN 202310111844
(43) Date of publication of application: 17.12.2025
(73) Proprietor: Hangzhou Hikvision Digital Technology Co., Ltd., Hangzhou, Zhejiang 310051 (CN)
(72) Inventor: QIN, Zizhen, Hangzhou, Zhejiang 310051 (CN)
(74) Representative: Dai, Simin
(86) International application number: PCT/CN2024/073748
(87) International publication number: WO 2024/169546

(56) References cited:
- CN-A- 1 801 892
- CN-A- 108 145 741
- CN-A- 110 300 249
- CN-A- 111 356 639
- CN-A- 116 366 936
- CN-U- 206 845 597
- CN-U- 206 845 597
- CN-U- 209 845 090
- CN-U- 209 845 090
- CN-U- 210 050 483
- CN-U- 216 202 011
- CN-U- 217 153 662
- CN-Y- 201 348 711
- CN-Y- 201 348 711
- JP-A- 2008 035 504

## Description

### TECHNICAL FIELD

The present application relates to the field of camera intended to be mounted, which camera includes a mounting adapter structure and a base assembly.

### BACKGROUND

With the continuous development of the field of security monitoring, users' demands for cameras have been increasing. Cameras for security monitoring may be mounted at high mounting locations such as walls or ceilings. Some cameras may be secured to the mounting locations via bolted connections. The high overall mounting height of the cameras makes it more difficult to mount and remove the cameras.

Patent document CN209845090U describes examples of the related art.

CN214842386 U discloses a camera comprising a mounting adapter structure and a base assembly detachably connected by cooperating snap-fit structures.

### SUMMARY

The invention is defined by the appended claims.

### BRIEF DESCRIPTION OF DRAWINGS

The accompanying drawings, which are incorporated in and constitute a part of this specification, illustrate embodiments consistent with the present application and, together with the specification, serve to explain the principles of the present application.
FIG. 1 is a perspective view of a camera according to an exemplary embodiment of the present application.
FIG. 2 is an exploded perspective view of the camera shown in FIG. 1.
FIG. 3 is a perspective view of a base assembly and a lens assembly of the camera shown in FIG. 1.
FIG. 4 is a partial exploded view of the base assembly and the lens assembly of the camera shown in FIG. 3.
FIG. 5 is a partial enlarged view of the base assembly and the lens assembly of the camera shown in FIG. 3.
FIG. 6 is a partial enlarged view of the base assembly and the lens assembly of the camera shown in FIG. 4.
FIG. 7 is a schematic structural diagram illustrating a process in which a base assembly is mounted to a mounting adapter structure of the camera shown in FIG. 1.
FIG. 8 is a schematic structural diagram illustrating a process in which a base assembly is mounted to a mounting adapter structure of the camera shown in FIG. 1.
FIG. 9 is a schematic structural diagram illustrating a process in which a base assembly is mounted to a mounting adapter structure of the camera shown in FIG. 1.
FIG. 10 is a perspective view of a mounting adapter structure of the camera shown in FIG. 1.

### DETAILED DESCRIPTION

Reference will now be made in detail to exemplary embodiments, examples of which are illustrated in the accompanying drawings. When the following description refers to the drawings, the same numerals in different drawings indicate the same or similar elements, unless otherwise indicated. Implementations described in the following exemplary embodiments are not intended to represent all implementations consistent with the present application. Rather, they are merely examples of apparatuses and methods consistent with some aspects of the present application as detailed in the appended claims.

Terminology used herein is for the purpose of describing particular embodiments only, and is not intended to be limiting of the present application. Unless otherwise defined, technical or scientific terms used herein shall have their ordinary meanings as understood by a person of ordinary skill in the art to which the present application belongs. The terms "first," "second," and the like, as used in the specification and claims of the present application are not intended to denote any order, quantity, or importance, but rather distinguish one component from another. Similarly, the terms "one," "a" or "an" and the like do not denote a limitation of quantity, but rather denote the presence of at least one. "A plurality of" or "multiple" means two or more. Unless otherwise indicated, the terms "front," "rear," "lower," and/or "upper" and the like are for convenience of description only and are not limited to one position or one spatial orientation. The terms "comprising" or "including" and the like are intended to mean that an element or item preceding "comprising" or "including" encompasses elements or items listed after "comprising" or "including" and their equivalents, but do not exclude other elements or items. The terms "connected" or "coupled" and the like are not limited to physical or mechanical connections, but may include electrical connections, whether direct or indirect.

As used in the present application and the appended claims, the singular forms of "a," "an," "said," and "the" are intended to include plural forms as well, unless the context clearly dictates otherwise. It should also be understood that the term "and/or" as used herein refers to and encompasses any or all possible combinations of one or more of the associated listed items.

The present application provides a camera. The camera according to the present application will be described in detail below in conjunction with the accompanying drawings. Features in the embodiments and implementations described below may be combined with each other without conflict.

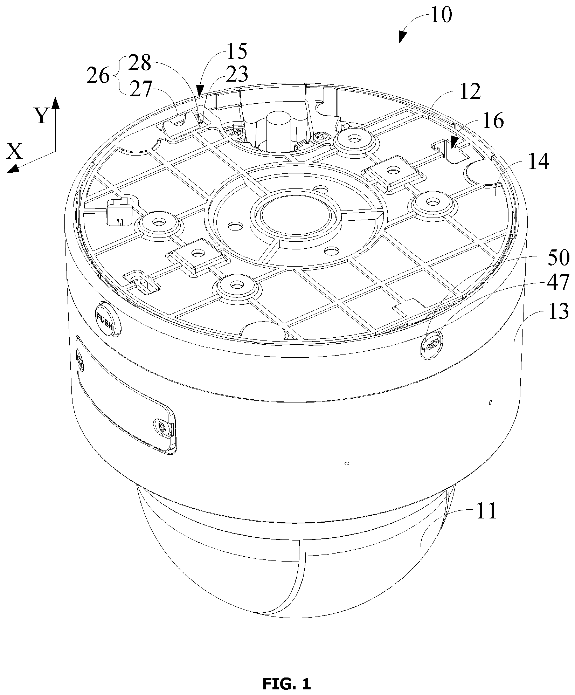

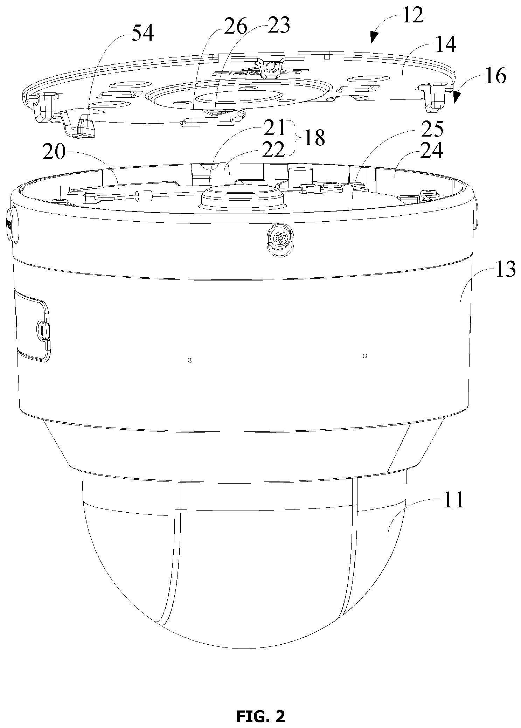

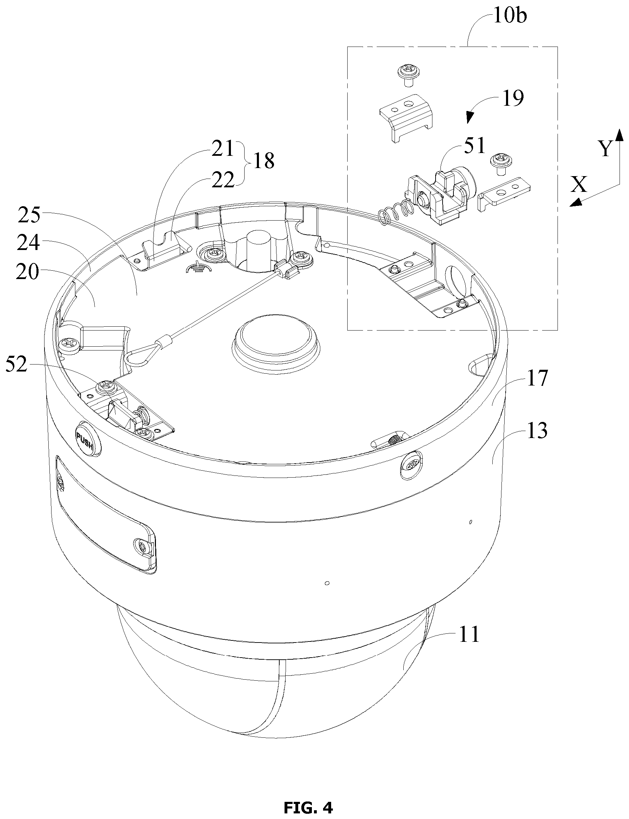

Referring to FIGS. 1 to 4, the present application provides a camera 10. The camera 10 may include a spherical camera, a dome camera, a bullet camera, or another type of camera, which is not limited herein. The camera 10 includes a lens assembly 11, a mounting adapter structure 12, and a base assembly 13. The lens assembly 11 may be configured for shooting and monitoring. The lens assembly 11 is mounted to the base assembly 13, and the base assembly 13 is detachably mounted to the mounting adapter structure 12. The mounting adapter structure 12 is configured for being mounted at a mounting location, such that the camera 10 may be mounted at the mounting location. It can be understood that the mounting location may include a ceiling, a wall, an electrical box, various types of brackets, and other locations for mounting the camera 10. In the embodiment shown in FIG. 1, the lens assembly 11 is mounted to the bottom of the base assembly 13, and the top of the base assembly 13 is detachably mounted to the mounting adapter structure 12. During the mounting of the camera 10, the mounting adapter structure 12 may be mounted at the mounting location first, and an outlet terminal of the lens assembly 11 is fixed to a customer cable, and then the base assembly 13, which has been fixedly connected with the lens assembly 11, is mounted to the mounting adapter structure 12. The mounting adapter structure 12 may be made of a material such as metal, plastic, or the like. The mounting adapter structure 12 may be in the shape of a circle, a square, or the like, which is not limited herein.

In some embodiments, the mounting adapter structure 12 includes at least an adapter body 14 and a snap-fit mating structure 16 disposed on the adapter body 14. The base assembly 13 includes a base body 17 and a snap-fit structure 19 movably disposed in the base body 17. The snap-fit mating structure 16 is disposed on a side of the adapter body 14 facing the base assembly 13, and the snap-fit mating structure 16, when pushing against the snap-fit structure 19, enables the snap-fit structure 19 to move until the snap-fit structure 19 engages with the snap-fit mating structure 16, such that the base assembly 13 is assembled to the mounting adapter structure 12. The snap-fit structure 19, when being pressed, disengages from the snap-fit mating structure 16, such that the base assembly 13 is detached from the mounting adapter structure 12. In this way, the base assembly 13 can be assembled to the mounting adapter structure 12, enabling the mounting of the base assembly 13 simpler. Moreover, the base assembly 13 can be detached from the mounting adapter structure 12 by pressing the snap-fit structure 19, thereby facilitating detachment of the base assembly 13 from the mounting adapter structure 12 with a simple and convenient operation.

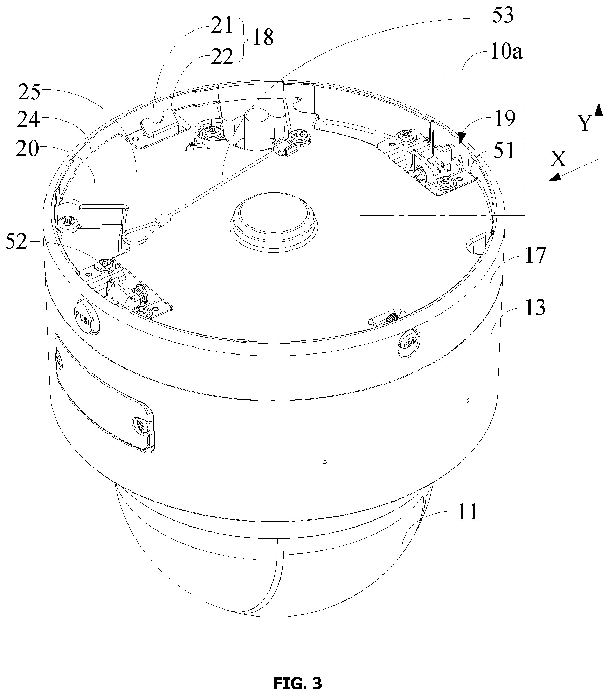

In this embodiment, the mounting adapter structure 12 includes the adapter body 14, a pre-hanging mating structure 15, and the snap-fit mating structure 16. The pre-hanging mating structure 15 and the snap-fit mating structure 16 are disposed on the adapter body 14. The pre-hanging mating structure 15 may be spaced apart from the snap-fit mating structure 16 along a circumferential direction of the adapter body 14. The base assembly 13 includes the base body 17, a pre-hanging structure 18, and the snap-fit structure 19 (as shown in FIG. 3). The pre-hanging structure 18 mates with the pre-hanging mating structure 15 during assembly, and the snap-fit structure 19 mates with the snap-fit mating structure 16 during assembly, so as to mount the base assembly 13 to the mounting adapter structure 12. The base body 17 includes a base mounting surface 20 that faces the mounting adapter structure 12. In the embodiment shown in FIG. 3, the base mounting surface 20 may be an upper surface of the base body 17 that mates with the mounting adapter structure 12. The pre-hanging structure 18 and the snap-fit structure 19 are disposed at the base mounting surface 20. In some embodiments, the base body 17 includes a surrounding edge 24 disposed to protrude from an edge of the base mounting surface 20. The surrounding edge 24 may be disposed around the base mounting surface 20 along a circumferential direction of the base mounting surface 20. The surrounding edge 24 and the base mounting surface 20 define an accommodating cavity 25. The accommodating cavity 25 may be configured to accommodate the mounting adapter structure 12. When the base assembly 13 is mounted to the mounting adapter structure 12, the mounting adapter structure 12 is accommodated in the accommodating cavity 25. This enables a smoother appearance design for the camera 10, enhancing the aesthetics of the camera 10, while allowing the base assembly 13 to be closer to the mounting location, saving the mounting space. The pre-hanging structure 18 is hung on the pre-hanging mating structure 15 such that the base assembly 13 is hung on the mounting adapter structure 12 and that the snap-fit structure 19 is aligned with the snap-fit mating structure 16. The pre-hanging structure 18 is hung on the pre-hanging mating structure 15, which can play a role in positioning, such that the mounting position of the snap-fit structure 19 may be determined, facilitating the positioning and mounting of the base assembly 13. It can be understood that the alignment of the snap-fit structure 19 with the snap-fit mating structure 16 means that the snap-fit structure 19 is located at a position against which the snap-fit mating structure 16 can be pushed. In this way, after the base assembly 13 is hung on the mounting adapter structure 12, the snap-fit mating structure 16 can be pushed against the snap-fit structure 19 by simply pushing the base assembly 13. The snap-fit structure 19 is movably disposed in the base body 17. The fact that the snap-fit structure 19 is movably disposed in the base body 17 may mean that the snap-fit structure 19 can be movably disposed in the base body 17 along a first direction X, or that the snap-fit structure 19 can be deformed through movement. The snap-fit mating structure 16 pushes against the snap-fit structure 19, to enable the snap-fit structure 19 to move until the snap-fit structure 19 engages with the snap-fit mating structure 16, such that the base assembly 13 is assembled to the mounting adapter structure 12. The snap-fit mating structure 16 may push against the snap-fit structure 19, to enable the snap-fit structure 19 to move in the first direction X, or the snap-fit mating structure 16 may push against the snap-fit structure 19, to enable the snap-fit structure 19 to deform, until the snap-fit structure 19 engages with the snap-fit mating structure 16. The snap-fit mating structure 16 is connected with the snap-fit structure 19 in a snap-fit manner, enabling a simple mounting and facilitating the assembly of the base assembly 13 with the mounting adapter structure 12. When the snap-fit structure 19 is pressed, the snap-fit structure 19 disengages from the snap-fit mating structure 16, and the pre-hanging structure 18 may disengage from the pre-hanging mating structure 15 by moving the base assembly 13, such that the base assembly 13 may be detached from the mounting adapter structure 12. In this way, the pre-hanging structure 18 may be hung on the pre-hanging mating structure 15 first, such that the snap-fit structure 19 is aligned with the snap-fit mating structure 16, and then the snap-fit mating structure 16 may be pushed against the snap-fit structure 19 until the snap-fit structure 19 engages with the snap-fit mating structure 16. In this way, the base assembly 13 can be assembled to the mounting adapter structure 12, enabling the mounting of the base assembly 13 simpler. Moreover, the base assembly 13 can be detached from the mounting adapter structure 12 by pressing the snap-fit structure 19, thereby facilitating detachment of the base assembly 13 from the mounting adapter structure 12, enabling quicker mounting and detachment of the base assembly 13 from the mounting adapter structure 12 with a simpler operation.

In some embodiments, the snap-fit structure 19 includes at least one snap-fit structure 19, and the shape of the base body 17 may be circular. The at least one snap-fit structure 19 includes a first snap-fit structure 51 and a second snap-fit structure 52 disposed opposite to each other in a radial direction of the base body 17. This arrangement enables the base assembly 13 more stable when assembled to the mounting adapter structure 12.

In some embodiments, the base assembly 13 further includes a safety rope 53, which may be secured to the base mounting surface 20 via bolts. The mounting adapter structure 12 further includes a safety hook 54 disposed on a surface of the mounting adapter structure 12 facing the base assembly 13. During mounting, the safety rope 53 may be suspended from the safety hook 54. In this way, the base assembly 13 can be prevented from loosening and directly falling off from the mounting adapter structure 12, which improves the safety.

Referring to FIGS. 1 to 4, in some embodiments, the pre-hanging structure 18 includes a connecting portion 21 and a bending portion 22. The connecting portion 21 may be secured to the base body 17. The connecting portion 21 may be secured to the base body 17 via bolts. The connecting portion 21 extends from the base body 17 towards the mounting adapter structure 12. The connecting portion 21 may extend from the base body 17 towards the mounting adapter structure 12 in a vertical direction, or may extend from the base body 17 towards the mounting adapter structure 12 in an inclined direction. In the embodiment shown in FIG. 3, the connecting portion 21 may extend upwardly from the base body 17 in a second direction Y. The bending portion 22 extends at an angle from the connecting portion 21 in a direction towards the mounting adapter structure 12 and an outer sidewall of the base body 17. The direction towards the outer sidewall of the base body 17 may refer to a direction away from a central axis of the base body 17. The pre-hanging mating structure 15 includes a pre-hanging groove 23 mating with the pre-hanging structure 18. It can be understood that the pre-hanging groove 23 may enable opposite side surfaces of the mounting adapter structure 12 disposed in the second direction Y to be communicated with each other. When the base assembly 13 is mounted to the mounting adapter structure 12, the connecting portion 21 extends into the pre-hanging groove 23, and the bending portion 22 overlaps an edge of the pre-hanging groove 23 facing away from the base assembly 13, such that the base assembly 13 can be hung on the mounting adapter structure 12. In some embodiments, the bending portion 22 is lower than the surrounding edge 24. In this way, after the mounting adapter structure 12 is mounted at the mounting location, the bending portion 22 may not be prevented from extending into the pre-hanging groove 23, which facilitates the mating and mounting of the pre-hanging mating structure 15 with the pre-hanging structure 18. The bending portion 22 extends at an angle in the direction towards the outer sidewall of the base body 17, such that when the base assembly 13 is mounted to the mounting adapter structure 12, the bending portion 22 can easily extend into the pre-hanging groove 23, thereby allowing the connecting portion 21 to extend into the pre-hanging groove 23.

In some embodiments, the connecting portion 21 is higher than the base mounting surface 20. In this way, when the base assembly 13 is mounted to the mounting adapter structure 12, the connecting portion 21 may extend into the pre-hanging groove 23, resulting in a larger overlapping area between the bending portion 22 and the edge of the pre-hanging groove 23 facing away from the base assembly 13, which enables the base assembly 13 to be hung on the mounting adapter structure 12 more stably.

In some embodiments, the pre-hanging groove 23 includes a pre-hanging ramp 26 extending at an angle from the adapter body 14 towards the base assembly 13 until transversely into the pre-hanging groove 23. The pre-hanging ramp 26 may protrude from a surface of the adapter body 14 facing the base assembly 13. The bending portion 22 overlaps the pre-hanging ramp 26. The pre-hanging ramp 26 may be provided to act as a guide, such that the hanging position of the pre-hanging structure 18 can be easily confirmed, and the bending portion 22 can easily extend into the pre-hanging groove 23.

In some embodiments, the pre-hanging ramp 26 includes a first ramp 27 and a second ramp 28 connected to the first ramp 27. The first ramp 27 extends at an angle from the adapter body 14 towards the base assembly 13 until transversely into the pre-hanging groove 23, and the second ramp 28 extends at an angle from the first ramp 27 towards the base assembly 13 until transversely into the pre-hanging groove 23. The first ramp 27 may mate with the bending portion 22. The bending portion 22 may overlap the first ramp 27, such that the pre-hanging structure 18 is hung on the pre-hanging mating structure 15, which in turn allows the base assembly 13 to be hung on the mounting adapter structure 12. The second ramp 28 may serve as a guide, and the bending portion 22 may extend into the pre-hanging groove 23 along the second ramp 28. In this way, the bending portion 22 can easily extend into the pre-hanging groove 23, which in turn facilitates the connecting portion 21 to extend into the pre-hanging groove 23. The pre-hanging structure 18 can extend into the pre-hanging groove 23 along the second ramp 28 and be hung on the first ramp 27. An angle of inclination of the first ramp 27 with respect to the adapter body 14 is smaller than an angle of inclination of the second ramp 28 with respect to the adapter body 14. In this way, the second ramp 28 has a better guiding effect, and due to the smaller angle of inclination of the first ramp 27 with respect to the adapter body 14, the base assembly 13 can be more stably hung on the first ramp 27 and is not easy to be separated therefrom.

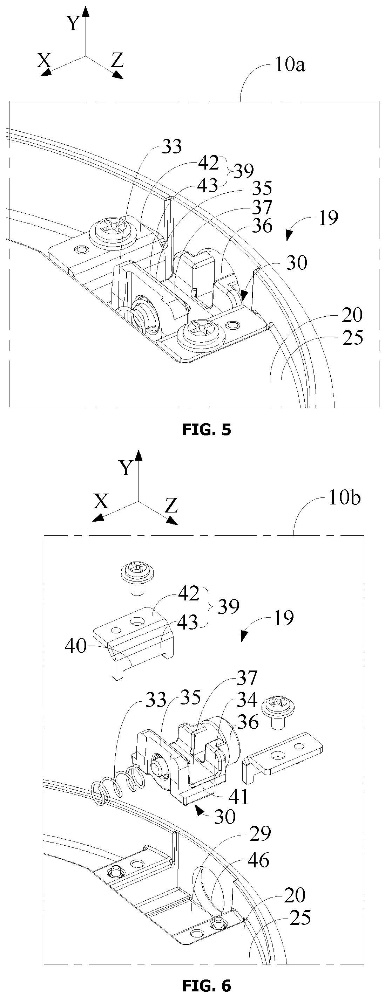

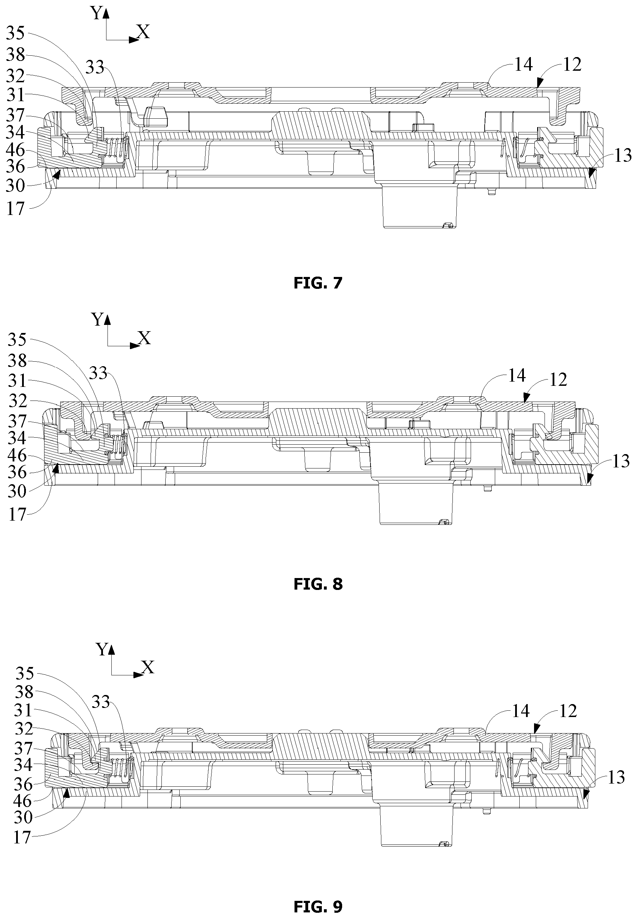

Referring to FIG. 5 to FIG. 9, in some embodiments, the snap-fit structure 19 includes a movable member 30 movably disposed in the base body 17. In this embodiment, the base mounting surface 20 is recessed to form a recessed portion 29. The snap-fit structure 19 includes the movable member 30, which is movably disposed in the recessed portion 29 and includes a movable hook 31 (as shown in FIG. 7). The movable member 30 may be movably disposed in the recessed portion 29 along the first direction X. The recessed portion 29 may serve to accommodate the movable member 30 and limit the displacement of the movable member 30. The snap-fit mating structure 16 includes an adapter hook 32. The adapter hook 32 and the movable hook 31 are disposed opposite to each other in the radial direction of the base body 17. The movable hook 31 may be connected with the adapter hook 32 in a mating manner, so as to realize the mating and mounting of the mounting adapter structure 12 with the snap-fit structure 19. In some embodiments, when the base assembly 13 is assembled to the mounting adapter structure 12, the adapter hook 32 pushes against the movable hook 31 and engages with the movable hook 31. When the movable member 30 is pressed, the movable member 30 moves away from the adapter hook 32 in the radial direction of the base body 17, such that the movable hook 31 disengages from the adapter hook 32, which in turn allows the base assembly 13 to be detached from the mounting adapter structure 12. Referring to FIG. 7 to FIG. 9, when the base assembly 13 is mounted to the mounting adapter structure 12, the adapter hook 32 pushes against the movable hook 31 to move the movable member 30, until the adapter hook 32 moves from one side to the other side of the movable hook 31, at which time the movable member 30 moves in an opposite direction, and the movable hook 31 resets and engages with the adapter hook 32. In the embodiment shown in FIG. 7 to FIG. 9, when the base assembly 13 is mounted to the mounting adapter structure 12, the base assembly 13 moves upwardly, such that the adapter hook 32 pushes against the movable hook 31 to move the movable member 30 in the first direction X, until the adapter hook 32 moves from an upper side of the movable hook 31 to a lower side of the movable hook 31. At this time, the adapter hook 32 has no force against the movable hook 31, the movable member 30 moves in an opposite direction, and the movable hook 31 resets and is connected with the adapter hook 32 in a snap-fit manner. This allows the mating and mounting of the snap-fit mating structure 16 with the snap-fit structure 19. In this way, the mounting of the snap-fit mating structure 16 and the snap-fit structure 19 is simple and easy to operate.

In some embodiments, the snap-fit structure 19 includes an elastic member 33. The elastic member 33 may include an elastic structure such as a spring or an elastic sheet. The elastic member 33 is disposed between a sidewall of the recessed portion 29 and the movable member 30 in the radial direction of the base body 17. The elastic member 33 may be provided such that the movable member 30 has damping during mounting of the movable member 30 in the recessed portion 29, which allows the mounting of the movable member 30 more firm and stable. When the adapter hook 32 pushes against the movable hook 31, the elastic member 33 is in a compressed state. For example, when the adapter hook 32 pushes against the movable hook 31 or the movable member 30 is pressed, the elastic member 33 is compressed and is in a compressed state. When the adapter hook 32 moves to the other side of the movable hook 31, the elastic member 33 restores and pushes the movable member 30 to move in an opposite direction. For example, when the adapter hook 32 engages with the movable hook 31, the elastic member 33 restores and pushes the movable hook 31 until the movable hook 31 is against the adapter hook 32 in the radial direction of the base body 17. In this way, the restoring force generated by the elastic member 33 can be used to push the movable member 30 to move in an opposite direction, which facilitates the automatic resetting of the movable hook 31 with a simple and convenient operation.

In some embodiments, the movable member 30 includes a main body 34, a mating portion 35, and a pressing portion 36. The mating portion 35 and the pressing portion 36 protrude from the main body 34 towards the mounting adapter structure 12. The mating portion 35 and the pressing portion 36 are distributed on two sides of the main body 34 in the radial direction of the base body 17, and the pressing portion 36 is disposed closer to an outer side of the base assembly 13 than the mating portion 35. A mating gap 37 is defined between the pressing portion 36 and the mating portion 35. The movable hook 31 includes an inclined surface 38 extending at an angle from the mating portion 35 towards the mating gap 37. When the base assembly 13 is mounted to the mounting adapter structure 12, the adapter hook 32 pushes against the inclined surface 38 to move the movable member 30.

In the embodiment shown in FIG. 6, the mating portion 35 and the pressing portion 36 are provided so as to protrude upwardly from the main body 34 in the second direction Y. The mating portion 35 is disposed closer to an inner side of the base body 17 than the pressing portion 36, and the pressing portion 36 and the mating portion 35 have the mating gap 37 therebetween. A pressing operation may be performed on the pressing portion 36 to press the snap-fit structure 19, such that the snap-fit structure 19 may disengage from the snap-fit mating structure 16, and thus the base assembly 13 may be detached from the mounting adapter structure 12. The movable hook 31 is disposed at an end of the mating portion 35 close to the mounting adapter structure 12, and protrudes from the mating portion 35 towards the mating gap 37. It can be understood that, when the movable hook 31 engages with the adapter hook 32, the adapter hook 32 may be accommodated in the mating gap 37. The movable hook 31 includes the inclined surface 38 extending at an angle from a surface of the mating portion 35 close to the mounting adapter structure 12 towards the mating gap 37. When the base assembly 13 is mounted to the mounting adapter structure 12 in a mating manner, the adapter hook 32 pushes against the inclined surface 38 to move the movable member 30. The inclined surface 38 may be provided to act as a guide, such that when the adapter hook 32 pushes against the movable hook 31 in the second direction Y, the movable member 30 can be moved in the first direction X perpendicular to the second direction Y. This structure is simple, and the direction of movement of the movable member 30 can be easily controlled.

Referring to FIG. 5 and FIG. 6, in some embodiments, the snap-fit structure 19 includes a fixed pressure plate 39, which is configured to limit the movable member 30 in the recessed portion 29 of the base body 17. The fixed pressure plate 39 may be provided to limit the displacement of the movable member 30 within the recessed portion 29. The fixed pressure plate 39 may limit the displacement of the movable member 30 in the second direction Y and in a third direction Z perpendicular to the first direction X and the second direction Y, such that the movable member 30 may be movably disposed in the recessed portion 29 only in the first direction X, thereby ensuring the reliability of the movement of the movable member 30. The fixed pressure plate 39 is provided with a limiting groove 40. The fixed pressure plate 39 is recessed on a side thereof to provide the limiting groove 40, which extends in the radial direction of the base body 17. The limiting groove 40 may extend in the first direction X. The movable member 30 includes the main body 34 and a protruding edge 41 protruding outwardly from the main body 34. The protruding edge 41 may protrude from the main body 34 in the third direction Z. The protruding edge 41 is limited between the limiting groove 40 and a bottom surface of the recessed portion 29, and is movably disposed in the limiting groove 40 in the radial direction of the base body 17. The fixed pressure plate 39 may be provided to limit the movable member 30 within the recessed portion 29, which can further limit the range of movement of the movable member 30 movably disposed in the recessed portion 29 in the first direction X while ensuring the reliability of the movement of the movable member 30, so as to prevent the movable member 30 from coming out of the fixed pressure plate 39.

In some embodiments, the recessed portion 29 has an opening on a side facing the mounting adapter structure 12, such that the snap-fit structure 19 may be mounted into the recessed portion 29 through the opening. The fixed pressure plate 39 includes a first pressure plate 42 and a second pressure plate 43 connected to the first pressure plate 42. The first pressure plate 42 may be perpendicular to the second pressure plate 43, or may form an acute angle or an obtuse angle with the second pressure plate 43. The recessed portion 29 includes an inner side surface and an edge surface, the edge surface is connected to a side of the inner side surface facing the mounting adapter structure 12, and the first pressure plate 42 is fixedly connected to the edge surface. The first pressure plate 42 may be fixedly connected to the edge surface via bolts. The second pressure plate 43 extends along the inner side surface of the recessed portion 29, and the limiting groove 40 is provided in an edge of the second pressure plate 43 facing away from the first pressure plate 42. It can be understood that the second pressure plate 43 may be in close contact with the inner side surface of the recessed portion 29, such that the fixed pressure plate 39 can be mounted more stably, and the movable member 30 can be limited better. The edge surface is lower than the base mounting surface 20. In this way, there is enough space to accommodate the first pressure plate 42, so as to ensure that the first pressure plate 42 does not protrude from the base mounting surface 20 or does not protrude too much from the base mounting surface 20, and to ensure that the first pressure plate 42 does not interfere with the mounting of the base assembly 13 and the mounting adapter structure 12, such that the mounting adapter structure 12 can be accommodated in the accommodating cavity 25.

Referring to FIG. 7 to FIG. 9, in some embodiments, the base body 17 is provided, on an outer sidewall thereof, with a clearance hole 46 in communication with the recessed portion 29. During the process in which the movable hook 31 is connected with the adapter hook 32 in a snap-fit manner, the movable member 30 is movably disposed through the clearance hole 46, and when the movable hook 31 engages with the adapter hook 32, at least a portion of the movable member 30 protrudes from the clearance hole 46 beyond the outer sidewall of the base body 17. At least a portion of the pressing portion 36 protrudes from the clearance hole 46 beyond the outer sidewall of the base body 17. In this way, it is convenient for a user to find a pressing position for pressing the snap-fit structure 19 to disengage the snap-fit structure 19 from the snap-fit mating structure 16, such that the base assembly 13 is detached from the mounting adapter structure 12.

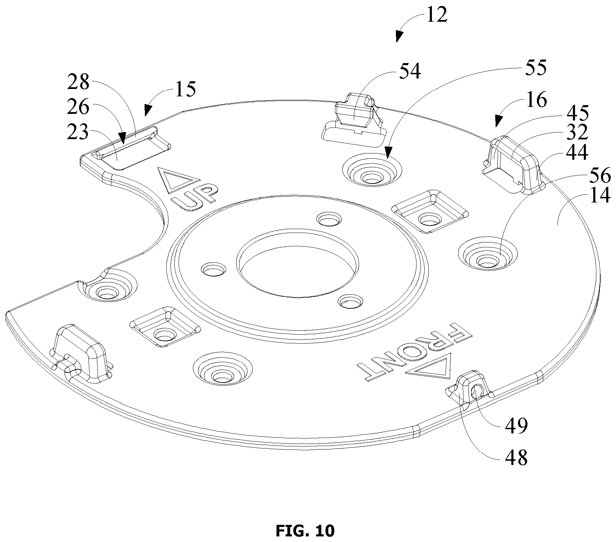

Referring to FIG. 10, in some embodiments, the snap-fit mating structure 16 includes a protrusion 44 that protrudes from a surface of the adapter body 14 facing the base assembly 13. The protrusion 44 is recessed on a side surface thereof to provide a snap-fit groove 45. The snap-fit groove 45 is provided on a side surface of the protrusion 44 facing the snap-fit structure 19 in the radial direction of the base body 17. It can be understood that, in a radial direction of the adapter body 14, the protrusion 44 is recessed on an inner side surface thereof to provide the snap-fit groove 45. The adapter hook 32 forms a wall of the snap-fit groove 45 facing away from the adapter body 14. In the embodiment shown in FIG. 10, the adapter hook 32 forms an upper wall of the snap-fit groove 45. In this way, when the movable hook 31 is connected with the adapter hook 32 in a snap-fit manner, the movable hook 31 can be limited in the snap-fit groove 45, and the movable member 30 can be limited in the snap-fit groove 45, such that the snap-fit mating structure 16 and the snap-fit structure 19 can be fitted together more firmly, and the fixing effect of the base assembly 13 is better and more stable.

Referring to FIG. 1 and FIG. 10, in some embodiments, the camera 10 further includes a mounting member 47. The mounting member 47 may be a bolt. The mounting member 47 may lock the mounting adapter structure 12 and the base assembly 13, and fasten the base assembly 13 to the mounting adapter structure 12. The mounting adapter structure 12 further includes a fixing mating structure 48 protruding from a surface of the adapter body 14 close to the base assembly 13. The pre-hanging mating structure 15, the snap-fit mating structure 16, and the fixing mating structure 48 may be spaced apart from each other along the circumferential direction of the adapter body 14. An outer side surface of the fixing mating structure 48 extends at an angle inwardly from the adapter body 14. The outer side surface of the fixing mating structure 48 extends at an angle from an outer side surface of the adapter body 14 towards an inner side surface of the adapter body 14. The fixing mating structure 48 is provided with a first mounting hole 49 penetrating through an outer surface of the fixing mating structure 48, in other words, the first mounting hole 49 penetrates through the outer side surface of the fixing mating structure 48. The base assembly 13 is provided with a second mounting hole 50 in communication with the first mounting hole 49. When the mounting member 47 is a bolt, the first mounting hole 49 may be a threaded hole. The second mounting hole 50 may be a through hole. The mounting member 47 passes through the second mounting hole 50 to mate with the first mounting hole 49, so as to fixedly connect the base assembly 13 with the mounting adapter structure 12. The base assembly 13 is fixedly connected with the mounting adapter structure 12 by using the mounting member 47, enabling a good fixing effect and facilitating the mounting and dismounting of the mounting member 47. Moreover, the addition of the mounting member 47 on the basis of the snap-fit mating structure 16 engaging with the snap-fit structure 19 allows for more stable mounting of the base assembly 13. The outer side surface of the fixing mating structure 48 extends at an angle inwardly from the adapter body 14. The first mounting hole 49 is disposed on an inclined surface of the fixing mating structure 48. When the height of the mounting location is relatively high, the user does not need to lift his/her hands to fix the mounting member 47, which facilitates the mounting member 47 to pass through the second mounting hole 50 to mate with the first mounting hole 49.

In some embodiments, the pre-hanging structure 18 is disposed opposite to the second mounting hole 50 in the radial direction of the base body 17. This enables the mounting of the base assembly 13 more stable.

In some embodiments, the mounting adapter structure 12 includes a mounting portion 55 for cooperating with the mounting location, where the mounting portion 55 is disposed in the middle of the adapter body 14, and the pre-hanging mating structure 15, the snap-fit mating structure 16, and the fixing mating structure 48 are disposed around the mounting portion 55. In this way, it is possible to prevent interference between the structure for cooperating with the mounting location and the structure for cooperating with the base assembly 13, and at the same time, it is possible to facilitate the corresponding connections of the pre-hanging mating structure 15, the snap-fit mating structure 16, and the fixing mating structure 48 with the base assembly 13.

In some embodiments, the mounting portion 55 includes a plurality of mounting recesses 56 recessed inwardly from a surface of the adapter body 14 close to the base assembly 13. The camera 10 further includes a fixing member (not shown) that passes through a bottom surface of the mounting recess 56 for fixedly connecting to the mounting location, such that the mounting adapter structure 12 may be fixed to the mounting location. The fixing member may be disposed in the mounting recess 56 to prevent the fixing member from interfering with the mounting of the base assembly 13 and the mounting adapter structure 12, such that the mounting adapter structure 12 may be accommodated in the accommodating cavity 25.

Other embodiments of the present application will occur to those skilled in the art upon consideration of the specification and practice of the application disclosed herein. The present application is intended to cover any variations, uses, or adaptations of the present application that follow the general principles of the present application and include common general knowledge or conventional technical means in the art not disclosed herein. It is intended that the specification and embodiments be considered as exemplary only, with the true scope and spirit of the present application being indicated by the following claims.

It is to be understood that the present application is not limited to the precise constructions which have been described above and illustrated in the accompanying drawings, and that various modifications and changes may be made without departing from the scope thereof. The scope of the present application is limited only by the appended claims. portion 29. During the process in which the movable hook 31 is connected with the adapter hook 32 in a snap-fit manner, the movable member 30 is movably disposed through the clearance hole 46, and when the movable hook 31 engages with the adapter hook 32, at least a portion of the movable member 30 protrudes from the clearance hole 46 beyond the outer sidewall of the base body 17. At least a portion of the pressing portion 36 protrudes from the clearance hole 46 beyond the outer sidewall of the base body 17. In this way, it is convenient for a user to find a pressing position for pressing the snap-fit structure 19 to disengage the snap-fit structure 19 from the snap-fit mating structure 16, such that the base assembly 13 is detached from the mounting adapter structure 12.

Referring to FIG. 10, in some embodiments, the snap-fit mating structure 16 includes a protrusion 44 that protrudes from a surface of the adapter body 14 facing the base assembly 13. The protrusion 44 is recessed on a side surface thereof to provide a snap-fit groove 45. The snap-fit groove 45 is provided on a side surface of the protrusion 44 facing the snap-fit structure 19 in the radial direction of the base body 17. It can be understood that, in a radial direction of the adapter body 14, the protrusion 44 is recessed on an inner side surface thereof to provide the snap-fit groove 45. The adapter hook 32 forms a wall of the snap-fit groove 45 facing away from the adapter body 14. In the embodiment shown in FIG. 10, the adapter hook 32 forms an upper wall of the snap-fit groove 45. In this way, when the movable hook 31 is connected with the adapter hook 32 in a snap-fit manner, the movable hook 31 can be limited in the snap-fit groove 45, and the movable member 30 can be limited in the snap-fit groove 45, such that the snap-fit mating structure 16 and the snap-fit structure 19 can be fitted together more firmly, and the fixing effect of the base assembly 13 is better and more stable.

Referring to FIG. 1 and FIG. 10, in some embodiments, the camera 10 further includes a mounting member 47. The mounting member 47 may be a bolt. The mounting member 47 may lock the mounting adapter structure 12 and the base assembly 13, and fasten the base assembly 13 to the mounting adapter structure 12. The mounting adapter structure 12 further includes a fixing mating structure 48 protruding from a surface of the adapter body 14 close to the base assembly 13. The pre-hanging mating structure 15, the snap-fit mating structure 16, and the fixing mating structure 48 may be spaced apart from each other along the circumferential direction of the adapter body 14. An outer side surface of the fixing mating structure 48 extends at an angle inwardly from the adapter body 14. The outer side surface of the fixing mating structure 48 extends at an angle from an outer side surface of the adapter body 14 towards an inner side surface of the adapter body 14. The fixing mating structure 48 is provided with a first mounting hole 49 penetrating through an outer surface of the fixing mating structure 48, in other words, the first mounting hole 49 penetrates through the outer side surface of the fixing mating structure 48. The base assembly 13 is provided with a second mounting hole 50 in communication with the first mounting hole 49. When the mounting member 47 is a bolt, the first mounting hole 49 may be a threaded hole. The second mounting hole 50 may be a through hole. The mounting member 47 passes through the second mounting hole 50 to mate with the first mounting hole 49, so as to fixedly connect the base assembly 13 with the mounting adapter structure 12. The base assembly 13 is fixedly connected with the mounting adapter structure 12 by using the mounting member 47, enabling a good fixing effect and facilitating the mounting and dismounting of the mounting member 47. Moreover, the addition of the mounting member 47 on the basis of the snap-fit mating structure 16 engaging with the snap-fit structure 19 allows for more stable mounting of the base assembly 13. The outer side surface of the fixing mating structure 48 extends at an angle inwardly from the adapter body 14. The first mounting hole 49 is disposed on an inclined surface of the fixing mating structure 48. When the height of the mounting location is relatively high, the user does not need to lift his/her hands to fix the mounting member 47, which facilitates the mounting member 47 to pass through the second mounting hole 50 to mate with the first mounting hole 49.

In some embodiments, the pre-hanging structure 18 is disposed opposite to the second mounting hole 50 in the radial direction of the base body 17. This enables the mounting of the base assembly 13 more stable.

In some embodiments, the mounting adapter structure 12 includes a mounting portion 55 for cooperating with the mounting location, where the mounting portion 55 is disposed in the middle of the adapter body 14, and the pre-hanging mating structure 15, the snap-fit mating structure 16, and the fixing mating structure 48 are disposed around the mounting portion 55. In this way, it is possible to prevent interference between the structure for cooperating with the mounting location and the structure for cooperating with the base assembly 13, and at the same time, it is possible to facilitate the corresponding connections of the pre-hanging mating structure 15, the snap-fit mating structure 16, and the fixing mating structure 48 with the base assembly 13.

In some embodiments, the mounting portion 55 includes a plurality of mounting recesses 56 recessed inwardly from a surface of the adapter body 14 close to the base assembly 13. The camera 10 further includes a fixing member (not shown) that passes through a bottom surface of the mounting recess 56 for fixedly connecting to the mounting location, such that the mounting adapter structure 12 may be fixed to the mounting location. The fixing member may be disposed in the mounting recess 56 to prevent the fixing member from interfering with the mounting of the base assembly 13 and the mounting adapter structure 12, such that the mounting adapter structure 12 may be accommodated in the accommodating cavity 25.

Other embodiments of the present application will occur to those skilled in the art upon consideration of the specification and practice of the application disclosed herein. The present application is intended to cover any variations, uses, or adaptations of the present application that follow the general principles of the present application and include common general knowledge or conventional technical means in the art not disclosed herein. It is intended that the specification and embodiments be considered as exemplary only, with the true scope and spirit of the present application being indicated by the following claims.

It is to be understood that the present application is not limited to the precise constructions which have been described above and illustrated in the accompanying drawings, and that various modifications and changes may be made without departing from the scope thereof. The scope of the present application is limited only by the appended claims.

## Claims

1. A camera (10), comprising:
a lens assembly (11);
a mounting adapter structure (12) to be mounted at a mounting location, wherein the mounting adapter structure (12) comprises an adapter body (14) and a snap-fit mating structure (16) provided on the adapter body; and
a base assembly (13) to which the lens assembly (11) is mounted, wherein the base assembly (13) is detachably assembled to the mounting adapter structure (12) and comprises a base body (17) and a snap-fit structure (19) movably provided to the base body,
wherein the snap-fit mating structure (16) is provided on a side of the adapter body (14) facing the base assembly (13);
the snap-fit structure (19) comprises a movable member (30), which is movably provided to the base body (17) and comprises a movable hook (31);
the snap-fit mating structure (16) comprises an adapter hook (32), which is disposed opposite to the movable hook (31) in a radial direction of the base body (17);
when the base assembly (13) is assembled to the mounting adapter structure (12), the adapter hook (32) pushes against the movable hook (31) and engages with the movable hook (31);
when the movable member (30) is pressed, the movable member (30) moves away from the adapter hook (32) in the radial direction of the base body (17) to disengage the movable hook (31) from the adapter hook (32), such that the base assembly (13) is detached from the mounting adapter structure (12);
the base body (17) is provided with a recessed portion (29), and the movable member (30) is movably disposed in the recessed portion (29);
the snap-fit structure (19) comprises an elastic member (33) disposed between a sidewall of the recessed portion (29) and the movable member (30) in the radial direction of the base body (17);
when the adapter hook (32) pushes against the movable hook (31) or the movable member (30) is pressed, the elastic member (33) is compressed; and
when the adapter hook (32) engages with the movable hook (31), the elastic member (33) restores and pushes the movable hook (31) until the movable hook is against the adapter hook (32) in the radial direction of the base body (17),
**characterized in that**:
the mounting adapter structure (12) further comprises a pre-hanging mating structure (15) provided on the adapter body (14);
the base assembly (13) further comprises a pre-hanging structure (18) provided on the base body (17); and
in response to that the pre-hanging structure (18) is hung on the pre-hanging mating structure (15), the base assembly (13) is hung on the mounting adapter structure (12), and the snap-fit structure (19) is aligned with the snap-fit mating structure (16).

2. The camera (10) according to claim 1, wherein
the snap-fit structure (19) further comprises a fixed pressure plate (39) to limit the movable member (30) in the recessed portion (29) of the base body (17), wherein the fixed pressure plate (39) is provided with a limiting groove (40) extending in the radial direction of the base body (17); and
the movable member (30) comprises a main body (34) and a protruding edge (41) protruding outwardly from the main body (34), wherein the protruding edge (41) is movably disposed in the limiting groove (40) in the radial direction of the base body (17) and is limited between the limiting groove (40) and a bottom surface of the recessed portion (29).

3. The camera (10) according to claim 1 or 2, wherein the snap-fit mating structure (16) comprises a protrusion (44) protruding from a surface of the adapter body (14) facing the base assembly (13);
the protrusion (44) is provided, on a side surface thereof facing the snap-fit structure (19) in the radial direction of the base body (17), with a snap-fit groove (45); and
the adapter hook (32) forms a wall of the snap-fit groove (45) facing away from the adapter body (14).

4. The camera (10) according to any one of claims 1 to 3, wherein the base body (17) is provided, on an outer sidewall thereof, with a clearance hole (46) communicated with the recessed portion (29);
the movable member (30) is movably disposed through the clearance hole (46); and
when the movable hook (31) engages with the adapter hook (32), at least a portion of the movable member (30) protrudes from the clearance hole (46) beyond the outer sidewall of the base body (17).

5. The camera (10) according to any one of claims 1 to 4, wherein the movable member (30) comprises a main body (34), a mating portion (35) and a pressing portion (36), wherein the mating portion (35) and the pressing portion (36) are distributed on two sides of the main body (34) in the radial direction of the base body (17), the pressing portion (36) is disposed closer to an outer side of the base assembly (13) than the mating portion (35), and a mating gap (37) is defined between the pressing portion (36) and the mating portion (35); and
the movable hook (31) comprises an inclined surface (38) extending at an angle from the mating portion (35) towards the mating gap (37), and when the base assembly (13) is mounted to the mounting adapter structure (12), the adapter hook (32) pushes against the inclined surface (38) to move the movable member (30).

6. The camera (10) according to claim 5, wherein the pre-hanging structure (18) comprises a connecting portion (21) and a bending portion (22), wherein the connecting portion (21) extends from the base body (17) to the mounting adapter structure (12), and the bending portion (22) extends at an angle from the connecting portion (21) towards the mounting adapter structure (12) and an outer sidewall of the base body (17);
the pre-hanging mating structure (15) comprises a pre-hanging groove (23) mating with the pre-hanging structure (18); and
when the base assembly (13) is mounted to the mounting adapter structure (12), the connecting portion (21) extends into the pre-hanging groove (23), and the bending portion (22) overlaps an edge of the pre-hanging groove (23) facing away from the base assembly (13).

7. The camera (10) according to claim 6, wherein the pre-hanging groove (23) comprises a pre-hanging ramp (26) which extends at an angle from the adapter body (14) to the base assembly (13) until transversely into the pre-hanging groove (23); and the bending portion (22) overlaps the pre-hanging ramp (26).

8. The camera (10) according to claim 7, wherein the pre-hanging ramp (26) comprises a first ramp (27) and a second ramp (28) connected to the first ramp (27),
the first ramp (27) extends at an angle from the adapter body (14) towards the base assembly (13) until transversely into the pre-hanging groove (23),
the second ramp (28) extends at an angle from the first ramp (27) towards the base assembly (13) until transversely into the pre-hanging groove (23), and
the bending portion (22) extends into the pre-hanging groove (23) along the second ramp (28), and the first ramp (27) mates with the bending portion (22).

9. The camera (10) according to any one of claims 1 to 8, further comprising a mounting member (47);
wherein the mounting adapter structure (12) further comprises a fixing mating structure (48) protruding from a surface of the adapter body (14) close to the base assembly (13),
the fixing mating structure (48) is provided with a first mounting hole (49) penetrating through an outer surface of the fixing mating structure (48), and
the base assembly (13) is provided with a second mounting hole (50) in communication with the first mounting hole (49), and the mounting member (47) passes through the second mounting hole (50) to mate with the first mounting hole (49), such that the base assembly (13) is fixedly connected with the mounting adapter structure (12).

10. The camera (10) according to claim 9, wherein the outer surface of the fixing mating structure (48) extends at an angle inwardly from the adapter body (14) to form an inclined surface.

## Patentansprüche

1. Eine Kamera (10), umfassend:
eine Linsenanordnung (11);
eine Montageadapterstruktur (12), die an einer Montagestelle montiert werden soll, wobei die Montageadapterstruktur (12) einen Adapterkörper (14) und eine an dem Adapterkörper vorgesehene Schnappverbindungs-Gegenstruktur (16) umfasst; und
eine Basisanordnung (13), an der die Linsenanordnung (11) montiert ist, wobei die Basisanordnung (13) lösbar an der Montageadapterstruktur (12) angebracht ist und einen Basiskörper (17) und eine beweglich an dem Basiskörper vorgesehene Schnappverbindungsstruktur (19) umfasst,
wobei die Schnappverbindungs-Gegenstruktur (16) an einer der Basisanordnung (13) zugewandten Seite des Adapterkörpers (14) vorgesehen ist;
die Schnappverbindungsstruktur (19) ein bewegliches Element (30) umfasst, das beweglich an dem Basiskörper (17) vorgesehen ist und einen beweglichen Haken (31) umfasst;
die Schnappverbindungs-Gegenstruktur (16) einen Adapterhaken (32) umfasst, der dem beweglichen Haken (31) in einer radialen Richtung des Basiskörpers (17) gegenüberliegend angeordnet ist;
wenn die Basisanordnung (13) an der Montageadapterstruktur (12) angebracht wird, der Adapterhaken (32) gegen den beweglichen Haken (31) drückt und mit dem beweglichen Haken (31) in Eingriff kommt;
wenn das bewegliche Element (30) gedrückt wird, sich das bewegliche Element (30) in der radialen Richtung des Basiskörpers (17) von dem Adapterhaken (32) wegbewegt, um den beweglichen Haken (31) von dem Adapterhaken (32) zu lösen, sodass die Basisanordnung (13) von der Montageadapterstruktur (12) gelöst wird;
der Basiskörper (17) mit einem vertieften Abschnitt (29) versehen ist und das bewegliche Element (30) beweglich in dem vertieften Abschnitt (29) angeordnet ist;
die Schnappverbindungsstruktur (19) ein elastisches Element (33) umfasst, das in der radialen Richtung des Basiskörpers (17) zwischen einer Seitenwand des vertieften Abschnitts (29) und
dem beweglichen Element (30) angeordnet ist;
wenn der Adapterhaken (32) gegen den beweglichen Haken (31) drückt oder das bewegliche Element (30) gedrückt wird, das elastische Element (33) zusammengedrückt wird; und wenn der Adapterhaken (32) mit dem beweglichen Haken (31) in Eingriff kommt, das elastische Element (33) in seinen ursprünglichen Zustand zurückkehrt und den beweglichen Haken (31) drückt, bis der bewegliche Haken in der radialen Richtung des Basiskörpers (17) an dem Adapterhaken (32) anliegt,
**dadurch gekennzeichnet, dass**:
die Montageadapterstruktur (12) ferner eine an dem Adapterkörper (14) vorgesehene Voraufhängungs-Gegenstruktur (15) umfasst;
die Basisanordnung (13) ferner eine an dem Basiskörper (17) vorgesehene Voraufhängungsstruktur (18) umfasst; und
als Reaktion darauf, dass die Voraufhängungsstruktur (18) an der Voraufhängungs-Gegenstruktur (15) aufgehängt wird, die Basisanordnung (13) an der Montageadapterstruktur (12) aufgehängt wird und die Schnappverbindungsstruktur (19) mit der Schnappverbindungs-Gegenstruktur (16) ausgerichtet wird.

2. Die Kamera (10) nach Anspruch 1, wobei
die Schnappverbindungsstruktur (19) ferner eine feste Druckplatte (39) umfasst, um das bewegliche Element (30) in dem vertieften Abschnitt (29) des Basiskörpers (17) zu begrenzen, wobei die feste Druckplatte (39) mit einer Begrenzungsnut (40) versehen ist, die sich in der radialen Richtung des Basiskörpers (17) erstreckt; und
das bewegliche Element (30) einen Hauptkörper (34) und einen vorstehenden Rand (41) umfasst, der von dem Hauptkörper (34) nach außen vorsteht, wobei der vorstehende Rand (41) in der radialen Richtung des Basiskörpers (17) beweglich in der Begrenzungsnut (40) angeordnet ist und zwischen der Begrenzungsnut (40) und einer Bodenfläche des vertieften Abschnitts (29) begrenzt ist.

3. Die Kamera (10) nach Anspruch 1 oder 2, wobei die Schnappverbindungs-Gegenstruktur (16) einen Vorsprung (44) umfasst, der von einer der Basisanordnung (13) zugewandten Oberfläche des Adapterkörpers (14) vorsteht;
der Vorsprung (44) an einer Seitenfläche desselben, die der Schnappverbindungsstruktur (19) in der radialen Richtung des Basiskörpers (17) zugewandt ist, mit einer Schnappverbindungsnut (45) versehen ist; und
der Adapterhaken (32) eine von dem Adapterkörper (14) abgewandte Wand der Schnappverbindungsnut (45) bildet.

4. Die Kamera (10) nach einem der Ansprüche 1 bis 3, wobei der Basiskörper (17) an einer äußeren Seitenwand desselben mit einer Freigabeöffnung (46) versehen ist, die mit dem vertieften Abschnitt (29) in Verbindung steht;
das bewegliche Element (30) beweglich durch die Freigabeöffnung (46) hindurch angeordnet ist; und
wenn der bewegliche Haken (31) mit dem Adapterhaken (32) in Eingriff kommt, mindestens ein Abschnitt des beweglichen Elements (30) aus der Freigabeöffnung (46) über die äußere Seitenwand des Basiskörpers (17) hinaus vorsteht.

5. Die Kamera (10) nach einem der Ansprüche 1 bis 4, wobei das bewegliche Element (30) einen Hauptkörper (34), einen Eingriffsabschnitt (35) und einen Druckabschnitt (36) umfasst, wobei der Eingriffsabschnitt (35) und der Druckabschnitt (36) auf zwei Seiten des Hauptkörpers (34) in der radialen Richtung des Basiskörpers (17) verteilt sind, der Druckabschnitt (36) näher an einer Außenseite der Basisanordnung (13) angeordnet ist als der Eingriffsabschnitt (35) und ein Eingriffsspalt (37) zwischen dem Druckabschnitt (36) und dem Eingriffsabschnitt (35) definiert ist; und
der bewegliche Haken (31) eine geneigte Fläche (38) umfasst, die sich in einem Winkel von dem Eingriffsabschnitt (35) in Richtung des Eingriffsspalts (37) erstreckt, und wenn die Basisanordnung (13) an der Montageadapterstruktur (12) montiert wird, der Adapterhaken (32) gegen die geneigte Fläche (38) drückt, um das bewegliche Element (30) zu bewegen.

6. Die Kamera (10) nach Anspruch 5, wobei die Voraufhängungsstruktur (18) einen Verbindungsabschnitt (21) und einen gebogenen Abschnitt (22) umfasst,
wobei sich der Verbindungsabschnitt (21) von dem Basiskörper (17) zu der Montageadapterstruktur (12) erstreckt und sich der gebogene Abschnitt (22) in einem Winkel von dem Verbindungsabschnitt (21) in Richtung der Montageadapterstruktur (12) und einer äußeren Seitenwand des Basiskörpers (17) erstreckt;
die Voraufhängungs-Gegenstruktur (15) eine Voraufhängungsnut (23) umfasst, die mit der Voraufhängungsstruktur (18) zusammenwirkt; und
wenn die Basisanordnung (13) an der Montageadapterstruktur (12) montiert wird, sich der Verbindungsabschnitt (21) in die Voraufhängungsnut (23) erstreckt und der gebogene Abschnitt (22) einen von der Basisanordnung (13) abgewandten Rand der Voraufhängungsnut (23) überlappt.

7. Die Kamera (10) nach Anspruch 6, wobei die Voraufhängungsnut (23) eine Voraufhängungsrampe (26) umfasst, die sich in einem Winkel von dem Adapterkörper (14) zu der Basisanordnung (13) erstreckt, bis sie sich quer in die Voraufhängungsnut (23) hinein erstreckt; und der gebogene Abschnitt (22) die Voraufhängungsrampe (26) überlappt.

8. Die Kamera (10) nach Anspruch 7, wobei die Voraufhängungsrampe (26) eine erste Rampe (27) und eine mit der ersten Rampe (27) verbundene zweite Rampe (28) umfasst,
sich die erste Rampe (27) in einem Winkel von dem Adapterkörper (14) in Richtung der Basisanordnung (13) erstreckt, bis sie sich quer in die Voraufhängungsnut (23) hinein erstreckt,
sich die zweite Rampe (28) in einem Winkel von der ersten Rampe (27) in Richtung der Basisanordnung (13) erstreckt, bis sie sich quer in die Voraufhängungsnut (23) hinein erstreckt, und
sich der gebogene Abschnitt (22) entlang der zweiten Rampe (28) in die Voraufhängungsnut (23) erstreckt und die erste Rampe (27) mit dem gebogenen Abschnitt (22) zusammenwirkt.

9. Die Kamera (10) nach einem der Ansprüche 1 bis 8, ferner umfassend ein Montageelement (47);
wobei die Montageadapterstruktur (12) ferner eine Befestigungs-Gegenstruktur (48) umfasst, die von einer Oberfläche des Adapterkörpers (14) nahe der Basisanordnung (13) vorsteht,
die Befestigungs-Gegenstruktur (48) mit einer ersten Montageöffnung (49) versehen ist, die durch eine äußere Oberfläche der Befestigungs-Gegenstruktur (48) hindurchgeht, und
die Basisanordnung (13) mit einer zweiten Montageöffnung (50) versehen ist, die mit der ersten Montageöffnung (49) in Verbindung steht, und das Montageelement (47) durch die zweite Montageöffnung (50) hindurchgeht, um mit der ersten Montageöffnung (49) zusammenzuwirken, sodass die Basisanordnung (13) fest mit der Montageadapterstruktur (12) verbunden ist.

10. Die Kamera (10) nach Anspruch 9, wobei sich die äußere Oberfläche der Befestigungs-Gegenstruktur (48) in einem Winkel von dem Adapterkörper (14) nach innen erstreckt, um eine geneigte Fläche zu bilden.

## Revendications

1. Une caméra (10), comprenant :
un ensemble de lentilles (11) ;
une structure d'adaptateur de montage (12) destinée à être montée à un emplacement de montage, dans laquelle la structure d'adaptateur de montage (12) comprend un corps d'adaptateur (14) et une structure d'accouplement par encliquetage (16) prévue sur le corps d'adaptateur ; et
un ensemble de base (13) sur lequel l'ensemble de lentilles (11) est monté, dans laquelle l'ensemble de base (13) est assemblé de manière amovible à la structure d'adaptateur de montage (12) et comprend un corps de base (17) et une structure d'encliquetage (19) prévue de manière mobile sur le corps de base,
dans laquelle la structure d'accouplement par encliquetage (16) est prévue sur un côté du corps d'adaptateur (14) faisant face à l'ensemble de base (13) ;
la structure d'encliquetage (19) comprend un élément mobile (30), qui est prévu de manière mobile sur le corps de base (17) et comprend un crochet mobile (31) ;
la structure d'accouplement par encliquetage (16) comprend un crochet d'adaptateur (32), qui est disposé à l'opposé du crochet mobile (31) dans une direction radiale du corps de base (17) ;
lorsque l'ensemble de base (13) est assemblé à la structure d'adaptateur de montage (12), le crochet d'adaptateur (32) pousse contre le crochet mobile (31) et vient en prise avec le crochet mobile (31) ;
lorsque l'élément mobile (30) est pressé, l'élément mobile (30) s'éloigne du crochet d'adaptateur (32) dans la direction radiale du corps de base (17) afin de désengager le crochet mobile (31) du crochet d'adaptateur (32), de telle sorte que l'ensemble de base (13) est détaché de la structure d'adaptateur de montage (12) ;
le corps de base (17) est pourvu d'une partie évidée (29), et l'élément mobile (30) est disposé de manière mobile dans la partie évidée (29) ;
la structure d'encliquetage (19) comprend un élément élastique (33) disposé entre une paroi latérale de la partie évidée (29) et l'élément mobile (30) dans la direction radiale du corps de base (17) ;
lorsque le crochet d'adaptateur (32) pousse contre le crochet mobile (31) ou que l'élément mobile (30) est pressé, l'élément élastique (33) est comprimé ; et
lorsque le crochet d'adaptateur (32) vient en prise avec le crochet mobile (31), l'élément élastique (33) reprend sa forme et pousse le crochet mobile (31) jusqu'à ce que le crochet mobile soit en appui contre le crochet d'adaptateur (32) dans la direction radiale du corps de base (17),
**caractérisée en ce que** :
la structure d'adaptateur de montage (12) comprend en outre une structure d'accouplement de pré-accrochage (15) prévue sur le corps d'adaptateur (14) ;
l'ensemble de base (13) comprend en outre une structure de pré-accrochage (18) prévue sur le corps de base (17) ; et
en réponse à l'accrochage de la structure de pré-accrochage (18) sur la structure d'accouplement de pré-accrochage (15), l'ensemble de base (13) est accroché à la structure d'adaptateur de montage (12), et la structure d'encliquetage (19) est alignée avec la structure d'accouplement par encliquetage (16).

2. La caméra (10) selon la revendication 1, dans laquelle
la structure d'encliquetage (19) comprend en outre une plaque de pression fixe (39) destinée à limiter l'élément mobile (30) dans la partie évidée (29) du corps de base (17), dans laquelle la plaque de pression fixe (39) est pourvue d'une rainure de limitation (40) s'étendant dans la direction radiale du corps de base (17) ; et
l'élément mobile (30) comprend un corps principal (34) et un bord saillant (41) faisant saillie vers l'extérieur à partir du corps principal (34), dans laquelle le bord saillant (41) est disposé de manière mobile dans la rainure de limitation (40) dans la direction radiale du corps de base (17) et est limité entre la rainure de limitation (40) et une surface de fond de la partie évidée (29).

3. La caméra (10) selon la revendication 1 ou 2, dans laquelle la structure d'accouplement par encliquetage (16) comprend une saillie (44) faisant saillie à partir d'une surface du corps d'adaptateur (14) faisant face à l'ensemble de base (13) ;
la saillie (44) est pourvue, sur une surface latérale de celle-ci faisant face à la structure d'encliquetage (19) dans la direction radiale du corps de base (17), d'une rainure d'encliquetage (45) ; et
le crochet d'adaptateur (32) forme une paroi de la rainure d'encliquetage (45) orientée à l'opposé du corps d'adaptateur (14).

4. La caméra (10) selon l'une quelconque des revendications 1 à 3, dans laquelle le corps de base (17) est pourvu, sur une paroi latérale extérieure de celui-ci, d'un trou de dégagement (46) communiquant avec la partie évidée (29) ;
l'élément mobile (30) est disposé de manière mobile à travers le trou de dégagement (46) ; et
lorsque le crochet mobile (31) vient en prise avec le crochet d'adaptateur (32), au moins une partie de l'élément mobile (30) fait saillie à partir du trou de dégagement (46) au-delà de la paroi latérale extérieure du corps de base (17).

5. La caméra (10) selon l'une quelconque des revendications 1 à 4, dans laquelle l'élément mobile (30) comprend un corps principal (34), une partie d'accouplement (35) et une partie de pression (36),
dans laquelle la partie d'accouplement (35) et la partie de pression (36) sont réparties sur deux côtés du corps principal (34) dans la direction radiale du corps de base (17), la partie de pression (36) est disposée plus près d'un côté extérieur de l'ensemble de base (13) que la partie d'accouplement (35), et un espace d'accouplement (37) est défini entre la partie de pression (36) et la partie d'accouplement (35) ; et
le crochet mobile (31) comprend une surface inclinée (38) s'étendant selon un angle depuis la partie d'accouplement (35) vers l'espace d'accouplement (37), et lorsque l'ensemble de base (13) est monté sur la structure d'adaptateur de montage (12), le crochet d'adaptateur (32) pousse contre la surface inclinée (38) afin de déplacer l'élément mobile (30).

6. La caméra (10) selon la revendication 5, dans laquelle la structure de pré-accrochage (18) comprend une partie de liaison (21) et une partie coudée (22),
dans laquelle la partie de liaison (21) s'étend depuis le corps de base (17) vers la structure d'adaptateur de montage (12), et la partie coudée (22) s'étend selon un angle depuis la partie de liaison (21) vers la structure d'adaptateur de montage (12) et une paroi latérale extérieure du corps de base (17) ;
la structure d'accouplement de pré-accrochage (15) comprend une rainure de pré-accrochage (23) s'accouplant avec la structure de pré-accrochage (18) ; et
lorsque l'ensemble de base (13) est monté sur la structure d'adaptateur de montage (12), la partie de liaison (21) s'étend dans la rainure de pré-accrochage (23), et la partie coudée (22) chevauche un bord de la rainure de pré-accrochage (23) orienté à l'opposé de l'ensemble de base (13).

7. La caméra (10) selon la revendication 6, dans laquelle la rainure de pré-accrochage (23) comprend une rampe de pré-accrochage (26) qui s'étend selon un angle depuis le corps d'adaptateur (14) vers l'ensemble de base (13) jusqu'à pénétrer transversalement dans la rainure de pré-accrochage (23) ; et la partie coudée (22) chevauche la rampe de pré-accrochage (26).

8. La caméra (10) selon la revendication 7, dans laquelle la rampe de pré-accrochage (26) comprend une première rampe (27) et une deuxième rampe (28) reliée à la première rampe (27),
la première rampe (27) s'étend selon un angle depuis le corps d'adaptateur (14) vers l'ensemble de base (13) jusqu'à pénétrer transversalement dans la rainure de pré-accrochage (23),
la deuxième rampe (28) s'étend selon un angle depuis la première rampe (27) vers l'ensemble de base (13) jusqu'à pénétrer transversalement dans la rainure de pré-accrochage (23), et la partie coudée (22) s'étend dans la rainure de pré-accrochage (23) le long de la deuxième rampe (28), et la première rampe (27) s'accouple avec la partie coudée (22).

9. La caméra (10) selon l'une quelconque des revendications 1 à 8, comprenant en outre un élément de montage (47) ;
dans laquelle la structure d'adaptateur de montage (12) comprend en outre une structure d'accouplement de fixation (48) faisant saillie à partir d'une surface du corps d'adaptateur (14) proche de l'ensemble de base (13),
la structure d'accouplement de fixation (48) est pourvue d'un premier trou de montage (49) traversant une surface extérieure de la structure d'accouplement de fixation (48), et
l'ensemble de base (13) est pourvu d'un deuxième trou de montage (50) en communication avec le premier trou de montage (49), et l'élément de montage (47) traverse le deuxième trou de montage (50) pour s'accoupler avec le premier trou de montage (49), de telle sorte que l'ensemble de base (13) est relié de manière fixe à la structure d'adaptateur de montage (12).

10. La caméra (10) selon la revendication 9, dans laquelle la surface extérieure de la structure d'accouplement de fixation (48) s'étend selon un angle vers l'intérieur depuis le corps d'adaptateur (14) pour former une surface inclinée.
